(19) Europäisches Patentamt

European Patent Office

Office européen des brevets

(11) Numéro de publication : **0 297 936 B1**

(12) **FASCICULE DE BREVET EUROPEEN**

(45) Date de publication du fascicule du brevet :
04.12.91 Bulletin 91/49

(21) Numéro de dépôt : **88401383.0**

(22) Date de dépôt : **08.06.88**

(51) Int. Cl.⁵ : **B61D 17/20, B60D 5/00, B62D 47/02**

(54) **Dispositif destiné à assurer la continuité de passage entre deux véhicules successifs ferroviaires ou routiers.**

(30) Priorité : **01.07.87 FR 8709360**

(43) Date de publication de la demande :
**04.01.89 Bulletin 89/01**

(45) Mention de la délivrance du brevet :
**04.12.91 Bulletin 91/49**

(84) Etats contractants désignés :
**AT BE CH DE ES FR GB GR IT LI LU NL SE**

(56) Documents cités :
**GB-A- 2 122 956**
**US-A- 3 399 632**
**US-A- 3 410 226**

(73) Titulaire : **CAOUTCHOUC MANUFACTURE ET PLASTIQUES**
**143bis, rue Yves le Coz**
**F-78005 Versailles (FR)**

(72) Inventeur : **Wanneroy, Roland**
**66 Boulevard Blanqui**
**F-75013 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

**Description**

L'invention est relative à un plancher déformable permettant la continuité de passage entre deux véhicules successifs — ferroviaires ou routiers — où la circulation des passagers est rendue possible grâce à l'utilisation de soufflets ou de passerelles étanches aux intempéries et au bruit. Elle concerne un dispositif déformable dont le but est de permettre les mouvements relatifs, en niveau et en gauchissement, entre les planchers des véhicules successifs et est plus particulièrement intéressante lorsque le nombre des véhicules reliés est supérieur à deux, car nombre de solutions de l'art antérieur ne sont pas applicables à cette configuration.

Généralement, la liaison entre les différentes caisses de véhicules — en particulier dans le cas des tramways — est assurée par tourillonnement autour d'un axe vertical d'une sorte de compartiment d'intercirculation, dans lequel les parois cylindriques, le plafond relativement plan et le plancher horizontal assurent une continuité matérielle des parois par rotation autour d'un axe perpendiculaire au plancher de chacun des véhicules que l'on veut relier, le tourillonnement d'un plancher par rapport à celui du compartiment d'intercirculation se faisant le long de deux arcs de cercle glissant l'un sur l'autre.

Le brevet FR 2.357.409 décrit un mode intéressant de réalisation d'une telle cinématique : les deux moitiés du compartiment d'intercirculation sont reliées entre elles par un axe horizontal, situé à proximité du plancher, ce qui permet d'assurer la continuité matérielle des planchers d'un véhicule à l'autre par une charnière voisine de cet axe transversal qui est, préférentiellement, disposé sur la traverse de charge d'un bogie médian. Il en résulte un liaison, du type "à la cardan", par trois axes perpendiculaires entre les véhicules. La torsion en roulis doit alors être absorbée par les suspensions des bogies extrêmes, en cas de gauche de voie. Ce dispositif présente l'inconvénient de ne pas être applicable, pour des raisons mécaniques, à un train formé de plus de deux caisses qui parcourt les gauches et inflexions de voies urbaines ou montagneuses, par exemple.

Le brevet EP 0.134.202 de FIAT décrit un autre mode de réalisation du compartiment d'intercirculation lorsque les chassis des véhicules consécutifs n'ont qu'un seul point commun, assuré par une rotule ; le compartiment d'intercirculation, matérialisé par deux planchers semi-circulaires prend alors orientation par un dispositif bissecteur de l'angle entre les deux caisses. Ces deux planchers du compartiment d'intercirculation permettent les gauchissements entre les planchers des différents véhicules, même si leur nombre est supérieur à deux, à condition que les planchers du compartiment d'intercirculation soient reliés par un plancher élastiquement déformable, qui n'est pas décrit dans le document cité.

Dans le brevet EP 0.181.294, de FIAT, le gauchissement d'un plancher rigide est permis par un axe de flexion diagonal. Le brevet FR 2.573.714, de FAIVELEY (préambule de la revendication 1) propose un plancher déformable, soutenu par des barres transversales, fixées à des moyens tels que des parallélogrammes articulés. Un tel plancher, devant suivre les énormes débattements — notamment en cisaillement — entre les véhicules auxquels il est fixé par ses extrémités, doit être très souple et, essentiellement, supporté par des barres traversantes, enfilées à travers des alvéoles qui en permettent la déformation.

L'analyse de l'art antérieur montre, à l'évidence, le besoin d'un plancher pour compartiment d'intercirculation entre véhicules ferroviaires ou routiers qui puisse supporter des charges tout en étant continu et qui soit susceptible d'assurer les déformations éventuelles de dénivellation, de gauchissement entre plans et de petites déformations élastiques des dispositifs de liaison entre véhicules.

La technique d'une nacelle tourillonnant par deux axes quasi-verticaux sur chaque plancher de véhicule, dont les deux moitiés, alignées, n'ont plus à absorber que dénivellations et gauchissements entre leurs planchers, sera utilement complétée par un plancher élastique remplissant ces conditions.

L'invention a donc pour objectif de proposer un tel plancher déformable, assurant une liaison continue avec les planchers des véhicules placés de part et d'autre du compartiment d'intercirculation et constituant les éléments d'un train, capable de supporter les déformations quel que soit le nombre des véhicules reliés et ce, malgré les dénivellations, le ballant latéral et les gauchissements entre les planchers desdits véhicules, sans présenter les inconvénients des solutions connues.

Cet objectif est atteint en prévoyant un plancher déformable tel que défini dans la revendication 1.

Ce débattement longitudinal des barres rigides transversales sur l'axe-support peut se faire par coulissement le long de l'axe, grâce à des paliers glissants comportant une garniture interne antifriction, fixés, par exemple, par emmanchement sur les barres rigides transversales et enfilés avec jeu sur les axes-supports qui reposent, par leurs extrémités sur les cadres de fixation aux planchers des véhicules.

Un autre moyen d'assurer le débattement longitudinal des barres rigides transversales est de monter leurs extrémités sur des axes-supports, par l'intermédiaire de paliers élastiquement déformables et de munir les extrémités des axes-supports d'appuis élastiques.

Il est bien évident, pour l'homme de l'art, qu'il est possible de combiner le montage coulissant et la déformation des appuis élastiques pour assurer les possibilités de débattement longitudinal.

Différents dispositifs sont donc possibles pour assurer un appui avec débattement des extrémités des barres rigides transversales sur des paliers glissants ou déformables ou encore sur des appuis simples. Ces différents moyens doivent seulement être susceptibles de petits mouvements dynamiques dans le sens longitudinal et/ou angulaires entre les parties de nacelle, alors que celles-ci tourillonnent sur chaque véhicule par un axe quasi vertical afin de rester sensiblement alignées dans un plan soit perpendiculaire au plan bissecteur des véhicules situés en courbe, soit perpendiculaire à l'axe vertical de symétrie lorsque les véhicules, restés parallèles, sont désalignés par l'inflexion entre courbe et contrecourbe.

Les particularités et variantes de l'invention seront mieux comprises à la lecture de la description accompagnant les dessins dans lesquels :

— la figure 1 est une vue de dessus du plancher déformable, situant sa position entre deux véhicules successifs ;

— la figure 2 est une vue en perspective expliquant un mode de liaison de la zone de circulation du plancher déformable sur l'axe supportant la charge ;

— la figure 3 représente une variante constituant une simplification du mode de liaison de la zone de circulation du plancher déformable sur les axes-supports.

— la figure 4 est une coupe longitudinale de la zone de circulation du plancher déformable, coupe commune à toutes les dispositions de liaison.

— la figure 5 décrit deux variantes à longueur variable des axes-supports.

— la figure 6 détaille deux variantes de paliers destinés à assurer le débattement des barres rigides transversales, par glissement ou par déformation en cisaillement, sur les axes-supports.

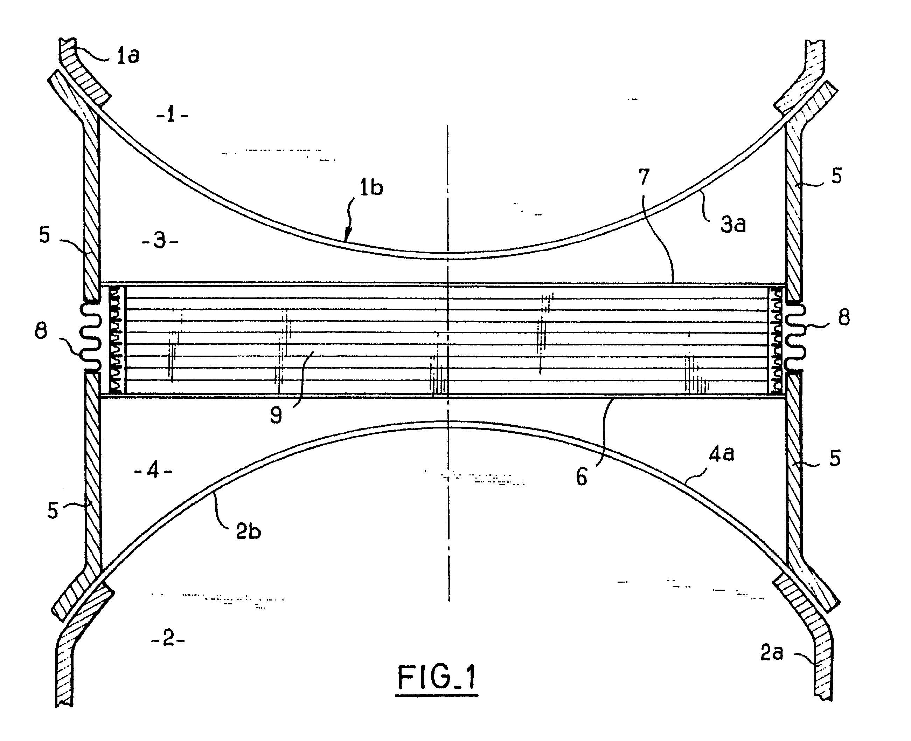

La figure 1 est une vue de dessus du plancher, non masqué par des sièges latéraux ou des caches qui viendront par la suite assurer la continuité des garnissages.

Les véhicules (1) et (2) sont représentés par une coupe horizontale de leurs parois latérales (1a) et (2a) et par leur planchers limités chacun par un arc de cercle (1b) et (2b).

Autour d'un axe vertical — situé hors de la figure — tourillonne une nacelle formée de deux demi-compartiments rigides (3) et (4) représentés par une coupe horizontale de leurs parois latérales (5) et leurs planchers limités, chacun, vers l'intérieur du véhicule par un arc de cercle (3a) et (4a) et vers son voisin par une limite rectiligne (6) ou (7). La continuité du plancher est assurée par la rotation des arcs (3a) et (1b) glissant l'un sur l'autre, ou, de même, par celles des arcs (4a) et (2b). Les mouvements de dénivellation, gauchissements et petites variations dynamiques de longueur de l'attelage sont absorbés par un joint approprié (8), connu par ailleurs, qui assure la continuité des parois latérales (5) des demi-compartiments rigides (3) et (4) et par un plancher déformable, fixé par ses extrémités planes aux limites rectilignes (6) et (7) des planchers des demi-compartiments rigides (3) et (4), en général bar boulonnage sur un plan vertical.

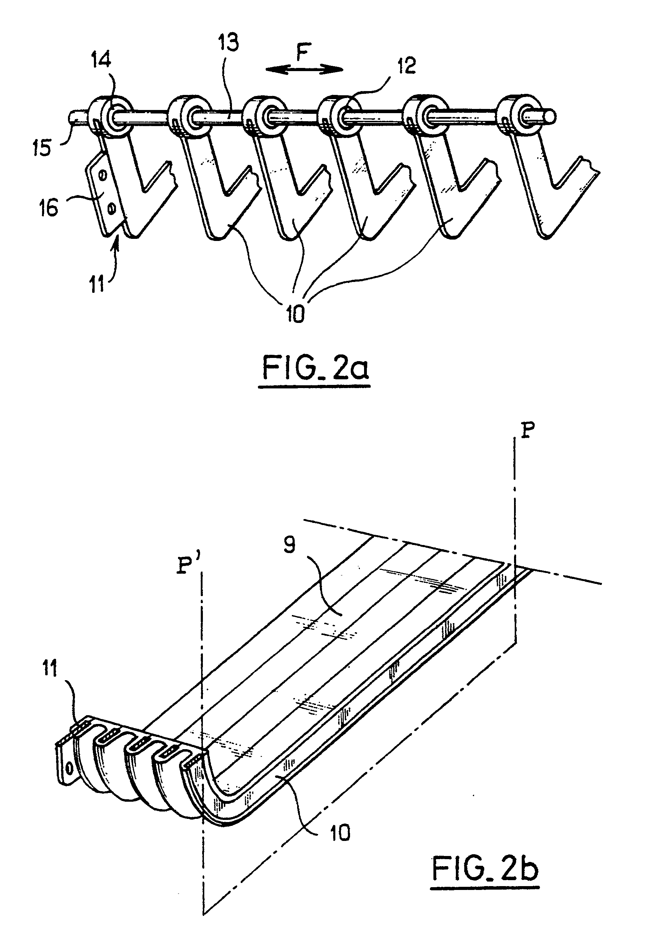

La figure 2 montre, en perspective, d'une part le mode de liaison, permettant de supporter la charge, entre les barres rigides transversales (10) et l'axe-support (13), ainsi qu'entre celui-ci et le cadre rigide (11) de fixation aux planchers de nacelle, d'autre part, une constitution particulière de la zone de circulation du plancher déformable (9).

La vue 2a illustre un dispositif permettant d'assurer le débattement longitudinal, de part et d'autre d'une position moyenne, des barres rigides transversales (10) — dont le nombre peut varier de deux à une dizaine — par coulissement desdites barres rigides transversales (10) le long de l'axe-support (13). Les barres rigides transversales (10) sont montées sur l'axe-support (13) par l'intermédiaire de paliers glissants (12) logés, par exemple, dans une chape soudée à chacune des extrémités desdites barres rigides transversales (10).

Les paliers glissants (12) sont enfilés sur l'axe-support lisse (13), en acier massif ou tubulaire, où l'élasticité de la zone de circulation du plancher déformable (9), monobloc, leur fait prendre une position d'équilibre quelconque en se déplaçant indifféremment dans un sens ou l'autre — comme représenté sur la double flèche (F) — malgré la charge verticale et du fait du faible coefficient de friction des paliers glissants (12).

Le cadre de fixation (11) servant au boulonnage sur les flancs verticaux des planchers de nacelle sera de forme voisine de celle des barres rigides transversales (10) et équipé d'équerres ou de plaques de boulonnage (16). Il peut être, également, muni de paliers glissants d'extrémité (14) qui, eux, seront renforcés, car ils doivent supporter toute la charge de plusieurs barres rigides transversales. En particulier, lors des dénivellations et gauches de voie les barres rigides transversales (10) prennent une position d'équilibre autorisant un certain travers, tandis que les paliers glissants d'extrémités (14) associés aux cadres de fixation (11) sur planchers de nacelle sont encastrés sur chaque demi-nacelle.

Les paliers glissants d'extrémité (14) doivent donc disposer d'une possibilité de rotation angulaire, malgré la charge, d'une plus grande amplitude que les paliers glissants (12), par exemple grâce à une bague élastique de plus grande possibilité de déformations. Pour qu'en aucune circonstance l'extrémité (15) de l'axe-support lisse (13) ne se déboite des paliers glissants d'extrémité (14), ledit axe-support (13) devra avoir une longueur suffisante pour admettre les allongements maximaux prévisibles et les garnissages servant de caches (non représentés) devront laisser libre l'encombrement nécessaire pour une compression maximale.

Le rappel vers une position d'équilibre de l'axe-support lisse (13) sera assuré, soit par serrage non glissant de l'un des paliers (12), s'il est situé dans le plan de symétrie, (donc si le nombre de barres rigides transversales est impair), soit par la fixation, en son milieu, d'un bossage ou Circlip approprié, si le nombre des barres rigides transversales (10) est choisi pair.

La vue 2b représente une constitution particulière de la zone de circulation du plancher déformable (9), dont la partie rigide est formée des barres rigides transversales (10), comme celle représentée, dans le plan de coupe PP′, recourbées vers la partie supérieure de la zone de circulation du plancher déformable (9) et dont les extrémités comportent les cadres de fixation (11) aux planchers de nacelle.

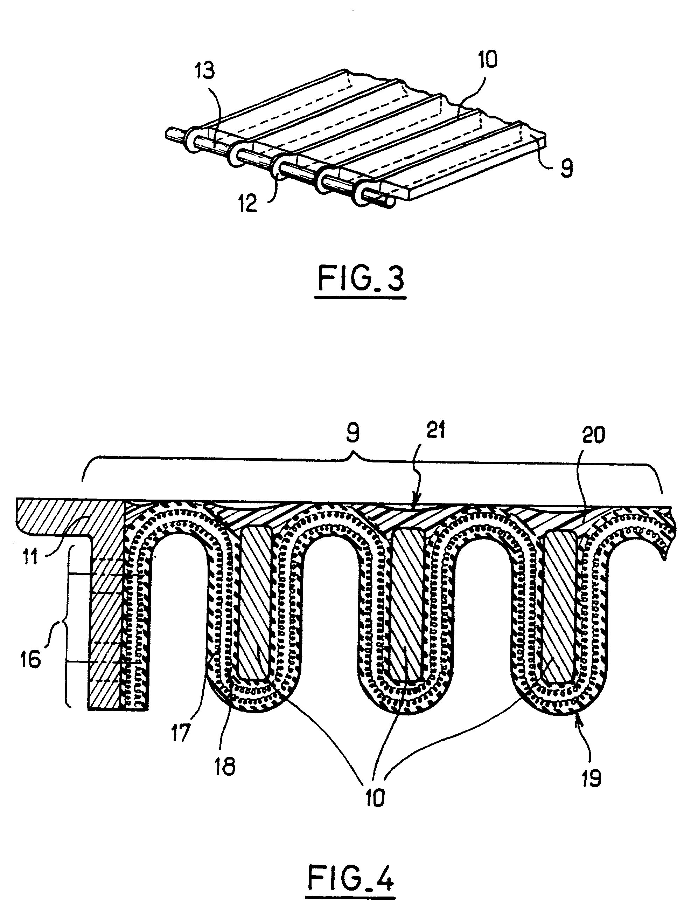

La figure 3 illustre une variante dans laquelle les barres rigides transversales (10) sont rectilignes et leurs paliers glissants (12) sont disposés, à leurs extrémités, dans l'alignement, l'axe-support lisse (13) qui les supporte étant, de ce fait, dans le même plan que la zone de circulation du plancher déformable (9).

Cette disposition, plus légère et dans laquelle la composition élastomérique renforcée de la zone de circulation du plancher déformable (9) ne nécessite aucune opération de mise en forme au cours de la confection, suppose que des caches déformables appropriés, (non représentés), assurent l'étanchéité en continuité avec les parois latérales des demi-compartiments et leur joint (en forme de soufflet, par exemple), ce qui reporte le problème géométrique sur des pièces moulées, constituant ces caches, qui ne supportent aucune charge, et ne nécessitent donc pas de renforcement comme l'exige la structure de circulation du plancher déformable (9).

La figure 4 est une coupe longitudinale de la zone de circulation du plancher déformable (9), qui est réalisée par moulage sous pression dans les conditions usuelles de l'industrie de transformation du caoutchouc. Les barres rigides transversales (10) — métalliques ou constituées de polymères homogènes ou composites rigides — sont traitées et revêtues de colles appropriées pour assurer une liaison chimique intime, appelée adhérisation, avec la composition élastomérique voisine, au cours de la vulcanisation.

Les barres rigides transversales (10) sont par exemple des fers plats du commerce, dont les extrémités peuvent être recourbées par forgeage pour prendre la forme correspondant à la variante de la vue 2a, traitées comme il vient d'être dit, ainsi que les cadres de fixation (11) aux planchers de nacelle, munis par exemple d'une équerre d'appui, comme représenté, si l'on veut éviter que la charge repose sur les vis de fixation des plaques de boulonnage (16).

Les barres rigides transversales (10) peuvent, également, être réalisées dans des matériaux polymériques, homogènes ou composites, présentant une résistance mécanique suffisante, dont la forme est obtenue par moulage.

La paroi de la zone de circulation du plancher déformable (9) comporte, préférentiellement, comme éléments de renforcement, deux plis orientés obliquement (17) et (18), de façon croisée symétriquement, constitués de câblés textiles de préférence à haut module, tel que, à titre d'exemple non limitatif, de l'aramide, ou bien de cables métalliques, ces éléments de renforcement étant enduits d'une composition élastomérique de formulation appropriée.

Les éléments de renforcement (17) et (18) sont plaqués, lors du moulage de la zone de circulation du plancher déformable, sur les faces des barres rigides transversales (10) et des deux cadres de fixation (11) aux planchers de nacelle, où, seule, la qualité de la liaison chimique intime obtenue sur toute leur face lors de la vulcanisation assure leur maintien en place.

La face extérieure (19) de la partie inférieure — en forme d'accordéon — de la zone de circulation du plancher déformable (9) peut être équipée d'un revêtement, en composition élastomérique, de protection contre les intempéries ou les projections de graisse et de poussières venues du train de roulement, dont la formulation est optimisée pour assurer également une bonne résistance au feu.

Un mode de réalisation possible consiste à plier en accordéon un assemblage plan de ces différents plis en appui sur les barres rigides transversales (10) pour les introduire dans un moule, où les extrémités latérales seront éventuellement mises en forme par confection si elles doivent être recourbées comme représenté sur la variante décrite en vue 2b.

La continuité de la face supérieure (21) de la zone de circulation du plancher déformable (9) pourra être obtenue, si nécessaire, par un apport de composition élastomérique constituant un bourrage des coins (20) au dessus des barres rigides transversales (10), améliorant l'adhérence entre celles-ci et les plis de renforcement (17) et (18). Le revêtement de la face supérieure (21), qui recevra lors du moulage un dessin ou une sculpture en relief, approprié pour servir de plancher évitant de glisser, peut être réalisé par une composition élastomérique de formulation adaptée pour assurer une grande résistance à l'abrasion, aux lavages et au vieillissement superficiel et optimisé, de préférence, pour résister au feu.

Pour les matériaux de base des compositions élastomériques des revêtements (19) et (21), seront préférentiellement choisis des élastomères comportant dans leur chaîne moléculaire des atomes de chlore ou de brome, c'est-à-dire des élastomères tels que, à titre d'exemples non limitatifs, du polychloroprène, du caoutchouc butyl chloré, du caoutchouc butyl bromé ou encore du polyéthylène chloré.

Les formulations de ces compositions élastomériques seront, bien évidemment adaptées, par adjonction de charges, d'agents anti-oxydants et vulcanisants à la fonction du revêtement (19) ou (21) considéré.

En variante, le matériau multicouche constituant la zone de circulation du plancher déformable (9), formé des renforcements (17) et (18) et des revêtements (19) et (21), en composition(s) élastomérique(s), pourrait être obtenu par la supersition de plis croisés d'élastomères anisotropes renforcés de fibres courtes orientées, par exemple au cours de l'opération de calandrage en feuilles de la composition élastomérique ainsi renforcée. Dans ce cas, la mise en forme des extrêmités pour la réalisation de la variante représentée en vue 2a peut faire perdre — sans inconvénient — l'orientation des fibres de renfort dans lesdites zones d'extrémité puisque ces parties n'ont alors qu'un rôle d'étanchéité et ne portent pas de charge.

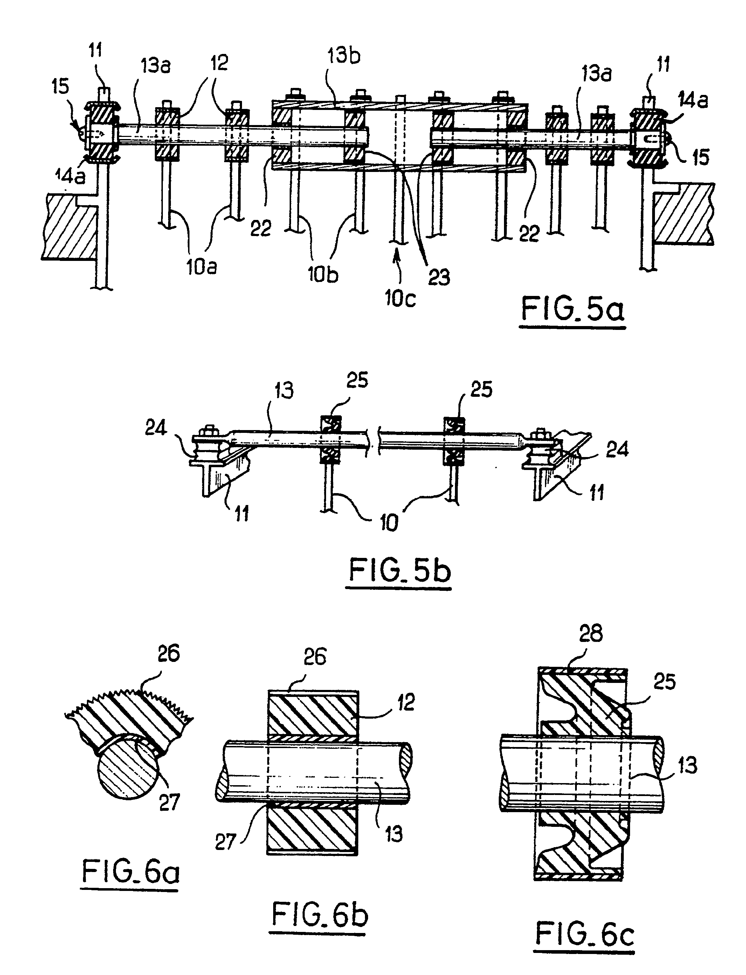

La figure 5 propose, pour assurer la fonction de support des charges de remplacer les axes-supports monoblocs (13) des variantes précédentes, soit par des éléments d'axes (13a) et (13b), télescopiques, soit par un ensemble constitué d'un axe-support monobloc (13) et d'appuis élastiques (24), ces dispositifs permettant d'obtenir un axe-support de longueur variable.

Sur la vue 5a, ces axes-supports (13) sont décomposés en trois éléments télescopiques (13a), (13b)..., ce qui — en particulier — permet de fixer l'extrêmité (15) de l'axe-support par ancrage ayant une possibilité de rotation dans le cadre (11) de fixation aux planchers de nacelle, par exemple par fixation à un palier à base de caoutchouc (14a) emmanché dans un logement du cadre rigide (11) de fixation aux planchers de nacelle, dont l'axe-support n'aura pas à dépasser lors des variations dynamiques de longueur de l'attelage.

Un certain nombre de barres rigides transversales (10a) peuvent être montées sur les paliers glissants (12) comme précédemment décrit pour la figure 2, d'autres barres rigides transversales (10b) étant en appui sur l'élément tubulaire (13b) de l'axe-support, lui-même centré élastiquement en position milieu par fixation à la barre rigide transversale (10c) située dans le plan de symétrie du plancher élastique.

Cependant, l'appui simple des barres rigides transversales (10b) sur l'élément tubulaire (13b) de l'axe-support peut être, par exemple, un appui glissant sur un secteur partiel n'englobant pas la totalité de la circonférence de l'élément tubulaire (13b) de l'axe-support, tout en remplissant le même rôle que les paliers glissants (12) qui entourent les barres rigides transversales (10a) montées sur la partie coulissante (13a) de l'axe-support. Les paliers glissants (22), permettant le coulissement télescopique des éléments (13a) dans l'élément tubulaire (13b) de l'axe-support, peuvent être ou non de même technologie que les paliers glissants (12) garnis intérieurement de matériau à faible coefficient de friction. Pour les paliers glissants (23) fixés à l'élément (13a) qui coulisse à l'intérieur de l'élément tubulaire (13b) de l'axe-support, c'est le revêtement extérieur qui sera obligatoirement garni d'un matériau antifriction.

Dans une variante — non représentée — correspondant à la disposition de la figure 2, l'appui glissant pourrait être réalisé par des paliers glissants à secteurs partiels analogues à ceux utilisés pour les barres rigides transversales (10b), ceci pour la totalité des barres rigides transversales alors en appui sur un axe-support lisse unique.

La vue 5b envisage un cas d'application à faibles débattements dans le sens longitudinal pouvant être absorbés par le cisaillement de paliers déformables (25), à base de caoutchouc, enfilés sur l'axe-support lisse (13) aux lieux et places des paliers glissants (12) et emmanchés de la même façon dans un logement à l'extrémité des barres rigides transversales (10).

Dans cette variante, l'axe-support lisse (13) peut être porté par des appuis élastiques (24) permettant de petites rotations angulaires, eux-mêmes liés au cadre de fixation (11) sur les planchers de nacelle par une équerre appropriée et capables d'absorber, par cisaillement sous charge, les faibles variations de longueur de l'attelage. Dans cette disposition, les chocs exceptionnels de compression de l'attelage, amenant en butée l'empilage des barres rigides transversales (10) par appui les uns sur les autres des plis textiles tels que (17) et/ou (18) et de leur revêtement (19) pincés par un tel choc, conduiraient très près de la limite de rupture la déformation en cisaillement maximal des appuis élastiques (24) sans occasionner nécessairement de destruction de tout ou partie de l'ensemble du plancher déformable.

Les combinaisons des dispositifs précédents conduisent à diverses variantes — non représentées — dans lesquelles le débattement longitudinal des barres rigides transversales sur l'axe-support, qui peut être monobloc ou constitué d'éléments télescopiques, est assuré par :

   — le montage coulissant desdites barres rigides transversales sur l'axe-support par l'intermédiaire de paliers glissants et par la déformation des appuis élastiques d'extrémité destinés à la liaison entre cet axe-support et le cadre de fixation aux planchers de nacelle ;

   — la déformation de paliers élastiques, à base de caoutchouc, permettant le montage desdites barres rigides transversales sur l'axe-support et par le coulissement de l'axe-support sur la cadre de fixation aux planchers de nacelle par l'intermédiaire des paliers glissants d'extrémité.

La figure 6 détaille deux variantes de paliers glissants (12) ou de leurs substituts, les paliers déformables à base de caoutchouc (25). La composition élastomérique du palier glissant (12), représenté libre sur les deux vues 6a et 6b, est emmanchée à force par sa surface extérieure (26), de préférence cannelée ou moletée, dans le logement porté par les barres rigides transversales. Cette même composition élastomérique est intimement liée, lors de la vulcanisation, avec une bague antifriction (27), formée préférentiellement de polyéthylène à très haute masse moléculaire, pour constituer le palier glissant.

Cette bague permet le passage de l'axe-support (13) dans son alésage, avec un jeu faible ou nul après l'assemblage.

Le palier déformable, à base de caoutchouc, (25) de la vue 6c peut être constitué de la même composition élastomérique, de préférence adhérisée à une bague (28), elle même métallique ou constituée d'un matériau plastique tel que, à titre d'exemple non limitatif, du polyamide. Ladite bague (28) permet l'emmanchement à force dans un alésage ménagé dans les fers plats ou les matériaux polymériques constituants les barres rigides transversales, sans nécessiter la soudure d'une bague cylindrique supplémentaire, rendant cet assemblage d'autant plus économique. Le passage de l'axe-support (13) devra se faire en force du fait du serrage de la composition élastomérique qui sera positionnée au moyen de cales, par emmanchement simultané, dans leur position moyenne, des diverses barres rigides transversales. Dans cette solution correspondant à la vue 5b, l'extrémité aplatie des axes-supports doit également passer par ces alésages avant d'être positionnée en appui simple sur des appuis élastiques d'extrémité desdits axes-supports.

Ces différentes solutions pour supporter les charges variables, venant porter sur les barres rigides transversales au passage de piétons ou de charges roulantes sur la zone de circulation du plancher déformable, constituent le moyen économique de réaliser industriellement un tel plancher déformable.

Un mode de fabrication préférentiel dudit plancher déformable consiste à réaliser, tout d'abord, la paroi épaisse en composition élastomérique renforcée, sous forme plane, puis à la plier en accordéon, en appui sur les barres rigides transversales préalablement traitées pour assurer l'adhérence, puis à introduire l'ensemble dans un moule de forme adéquate afin de le soumettre à l'opération de vulcanisation qui assurera, en même temps, la liaison chimique intime des éléments constitutifs.

Une opération complémentaire consiste dans le montage par emmanchement dans les logements prévus aux extrémités des barres rigides transversales soit des paliers glissants, soit des paliers déformables.

La zone de circulation du plancher déformable ainsi constituée est alors montée, par les différents dispositifs mécaniques destinés à assurer le débattement longitudinal des barres rigides transversales, sur l'axe-support.

## Revendications

1. Plancher déformable permettant la continuité de passage entre deux véhicules successifs ferroviaires ou routiers malgré les dénivellations, le ballant latéral et le gauchissement entre les planchers desdits véhicules, constitué d'une zone de circulation (9), faite d'une paroi épaisse, en forme d'accordéon, obtenue par moulage sous pression d'une composition élastomérique, et de barres rigides, disposées régulièrement espacées, parallèlement les unes aux autres et transversalement au sens de circulation, caractérisé en ce que ladite paroi épaisse comporte des revêtements en compositions élastomériques (19) et (21) comprenant au moins une couche de renforcement (17) ou (18), que ladite paroi épaisse est intimement liée, par adhérisation, auxdites barres rigides transversales (10) dont le montage, à chacune de leurs extrémités, sur un axe-support (13) — longitudinal, portant la charge et situé entre les véhicules — autorise le débattement longitudinal, de part et d'autre d'une position moyenne, desdites barres rigides transversales (10) sur l'axe-support (13), lui-même élastiquement supporté par le cadre de fixation (11) aux planchers de nacelle appartenant à chacun des véhicules ainsi reliés.

2. Plancher déformable selon la revendication 1, caractérisé en ce que le débattement longitudinal des barres rigides transversales (10) sur l'axe-support (13) est assuré par un montage coulissant desdites barres rigides transversales (10) sur l'axe-support (13) par l'intermédiaire de paliers glissants (12) et par celui de l'axe-support (13) sur le cadre de fixation (11) aux planchers de nacelle par l'intermédiaire de paliers glissants d'extrémité (14), lesdits paliers glissants (12) et (14) comportant, sur leur surface interne en contact avec l'axe-support (13), une couche de matériau antifriction.

3. Plancher déformable selon la revendication 1, caractérisé en ce que le débattement longitudinal des barres rigides transversales (10) sur l'axe-support (13) est assuré par la déformation élastique de paliers à base de caoutchouc (25) destinés au montage desdites barres rigides transversales (10) sur l'axe-support (13) et par la déformation des appuis élastiques d'extrémité (24) destinés à la liaison entre l'axe-support (13) et le cadre rigide de fixation (11) aux planchers de nacelle.

4. Plancher déformable selon la revendication 1, caractérisé en ce que le débattement longitudinal des barres rigides transversales (10) sur l'axe-support (13) est assuré par le montage coulissant desdites barres rigides transversales (10) sur l'axe-support (13) par l'intermédiaire de paliers glissants (12) et par la déformation des appuis élastiques d'extrémité (24) destinés à la liaison entre l'axe-support (13) et le cadre rigide de fixation (11) aux planchers de nacelle.

5. Plancher déformable selon la revendication 1, caractérisé en ce que le débattement longitudinal des barres rigides transversales (10) sur l'axe-support (13) est assuré par la déformation élastique des paliers à base de caoutchouc (25) destinés à la liaison entre lesdites barres rigides transversales (10) et l'axe-support (13) et par le coulissement de l'axe-support (13) sur le cadre rigide de fixation (11) aux planchers de nacelle, par l'intermédiaire des paliers glissants d'extrémité (14).

6. Plancher déformable selon l'une des revendications 1 à 5, caractérisé en ce que l'axe-support (13), métallique ou réalisé à partir de matériaux polymériques homogènes ou composites, est monobloc.

7. Plancher déformable selon l'une des revendications 1 à 5, caractérisé en ce que l'axe-support (13), métallique ou réalisé à partir de matériaux polymériques homogènes ou composites, est constitué d'éléments tels que (13a) et (13b) — au moins au nombre de deux — télescopiques.

8. Plancher déformable selon la revendication 1, caractérisé en ce que la paroi épaisse, en composition élastomérique renforcée, de la zone de circulation (9) dudit plancher déformable comporte, comme éléments de renforcement, une paire de plis croisés (17) et (18), orientés de manière symétrique, et constitués de cables textiles ou métalliques.

9. Plancher déformable selon la revendication 1, caractérisé en ce que la paroi épaisse, en composition élastomérique renforcée, de la zone de circulation (9) dudit plancher déformable comporte, comme éléments de renforcement, une paire de plis croisés (17) et (18), orientés de manière symétrique, et constitués de cables d'aramide.

10. Plancher déformable selon la revendication 1, caractérisé en ce que la paroi épaisse de la zone de circulation (9) dudit plancher déformable est constituée d'au moins deux couches (17) et (18) de composition élastomérique comportant — in situ — un matériau de renforcement constitué de fibres courtes orientées, ce qui les rend anisotropes.

11. Plancher déformable selon la revendication 1, caractérisé en ce que l'un au moins des revêtements en composition(s) élastomérique(s) (19) ou (21) de la paroi épaisse de la zone de circulation (9) dudit plancher déformable présente une formulation destinée à lui assurer une bonne résistance au feu.

12. Plancher déformable selon la revendication 11, caractérisé en ce que la composition élastomérique constituant l'un au moins des revêtements (19) ou (21) de la paroi épaisse de la zone de circulation (9) dudit plancher déformable comporte comme matériau de base un élastomère possédant, dans sa chaîne moléculaire des atomes de chlore ou de brome, tel que le polychoroprène, le caoutchouc butyle chloré ou bromé ou le polyéthylène chloré.

13. Plancher déformable selon la revendication 1, caractérisé en ce que la zone de circulation (9) dudit plancher déformable comporte, entre le revêtement supérieur ((21), en composition élastomérique, et la paroi épaisse en accordéon, dans les zones situées au dessus des barres rigides transversales (10) des coins de bourrage (20), également en composition élastomérique, destinés à assurer la planéité du revêtement supérieur (21) et à améliorer l'adhérence entre lesdites barres rigides transversales (10) et les plis de renforcement tels que (18) et/ou (19) de la paroi épaisse.

## Patentansprüche

1. Verformbarer Boden, der den stetigen Übergang zwischen zwei aufeinanderfolgenden Schienen- oder straßenfahrzeugen trotz Niveauunterschieden, Seitenschwankungen und Verwindung zwischen den Böden der Fahrzeuge erlaubt, der aus einer Durchgangszone (9) besteht, die aus einer dicken Wandung in Ziehharmonikaform gebildet ist, welche durch Druckgießen einer elastomeren Zusammensetzung und durch starre Schienen erhalten ist, die mit regelmäßigem Abstand, parallel zueinander und quer zur Durchgangsrichtung angeordnet sind, dadurch gekennzeichnet, daß die dicke Wandung Ummantelungen aus elastomeren Zusammensetzungen (19 und 21) umfaßt, die mindestens eine Verstärkungsschicht (17 oder 18) aufweisen, daß die dicke Wandung mit den starren Querschienen (10) durch Haftung innig verbunden ist, deren Aufhängung an jedem ihrer Enden auf einer längsgerichteten, die Last tragenden und zwischen den Fahrzeugen angeordneten Tragachse (13) eine beidseitige Längsverschiebung gegenüber einer mittleren Position der starren Querschienen (10) auf der Tragachse (13) erlaubt, die selbst durch einen Befestigungsrahmen (11) an den zu jedem der so verbundenen Fahrzeuge gehörenden Gondelböden elastisch aufgehängt ist.

2. Verformbarer Boden nach Anspruch 1, dadurch gekennzeichnet, daß die Längsverschiebung der starren Querschienen (10) auf der Tragachse (13) durch eine verschiebbare Lagerung der starren Querschienen (10) auf der Tragachse (13) mittels Gleitlager (12) und die der Tragachse (13) auf dem Befestigungsrahmen (11) an den Gondelböden mittels endständiger Gleitlager (14) sichergestellt ist, wobei die Gleitlager (12) und (14) auf ihren mit der Tragachse (13) in Kontakt stehenden inneren Oberflächen eine reibungsarme Beschichtung aufweisen.

3. Verformbarer Boden nach Anspruch 1, dadurch gekennzeichnet, daß die Längsverschiebung der starren Querschienen (10) auf der Tragachse (13) durch elastische Verformung von auf Kautschuk (25) basierenden Lagern, die für die Lagerung der starren Querschienen (10) auf der Tragachse (13) bestimmt sind, und durch Verformung von elastischen Endabstützungen (24), die für die Verbindung zwischen der Tragachse (13) und dem starren Befestigungsrahmen (11) an den Gondelböden bestimmt sind, sichergestellt ist.

4. Verformbarer Boden nach Anspruch 1, dadurch gekennzeichnet, daß die Längsverschiebung der starren Querschienen (10) auf der Tragachse (13) durch die verschiebbare Lagerung der starren Querschienen (10) auf der Tragachse (13) mittels Gleitlagern (12) und durch die Verformung von elastischen Endabstützungen (24), die für die Verbindung zwischen der Tragachse (13) und dem starren Halterahmen (11) an den Gondelböden bestimmt sind, sichergestellt ist.

5. Verformbarer Boden nach Anspruch 1, dadurch gekennzeichnet, daß die Längsverschiebung der starren Querschienen (10) auf der Tragachse (13) durch elastische Verformung von auf Kautschuk basierenden Lagern (25), die für die Verbindung zwischen den starren Querschienen (10) und der Tragachse (13) bestimmt sind, und durch das Gleiten der Tragachse (13) auf dem starren Befestigungsrahmen (11) an den Gondelböden mittels endständiger Gleitlager (14) sichergestellt ist.

6. Verformbarer Boden nach einem der Ansprüche 1 bis 5, dadurch gekennzeichnet, daß die metallische oder aus polymeren homogenen oder zusammengesetzten Materialien hergestellte Tragachse (13) einstückig ist.

7. Verformbarer Boden nach einem der Ansprüche 1 bis 5, dadurch gekennzeichnet, daß die metallische oder aus polymeren homogenen oder zusammengesetzten Materialien hergestellte Tragachse (13) aus mindestens zwei ausziehbaren Elementen der Art wie (13a) und (13b) gebildet ist.

8. Verformbarer Boden nach Anspruch 1, dadurch gekennzeichnet, daß die aus einer elastomeren, verstärkten Zusammensetzung gebildete dicke Wandung der Durchgangszone (9) des verformbaren Bodens als Verstärkungselemente ein Paar gewendelte Einlagen (17) und (18) enthält, die symmetrisch angeordnet sind und aus textilen oder metallischen Seilen bestehen.

9. Verformbarer Boden nach Anspruch 1, dadurch gekennzeichnet, daß die aus einer elastomeren, verstärkten Zusammensetzung gebildete dicke Wandung der Durchgangszone (9) des verformbaren Bodens als Verstärkungselemente ein Paar gewendelte Einlagen (17) und (18) enthält, die symmetrisch angeordnet sind und aus Aramidseilen bestehen.

10. Verformbarer Boden nach Anspruch 1, dadurch gekennzeichnet, daß die dicke Wandung der Durchgangszone (9) des verformbaren Bodens aus mindestens zwei Schichten (17) und (18) von elastomerer Zusammensetzung gebildet ist, die in sich ein Verstärkungsmaterial enthalten, das aus gerichteten Fasern besteht, die sie anisotrop machen.

11. Verformbarer Boden nach Anspruch 1, dadurch gekennzeichnet, daß mindestens eine der Ummantelungen aus elastomerer Zusammensetzung (19) oder (21) der dicken Wandung der Durchgangszone (9) des verformbaren Bodens einer zur Sicherstellung einer guten Feuerbeständigkeit dienenden Rezeptur genügt.

12. Verformbarer Boden nach Anspruch 11, dadurch gekennzeichnet, daß die mindestens eine der Ummantelungen (19) oder (21) der dicken Wandung der Durchgangszone (9) des verformbaren Bodens bildende elastomere Zusammensetzung als Basismaterial ein Elastomer enthält, das in seiner Molekülkette Chlor- oder Bromatome besitzt, wie Polychloropren, chlorierter oder bromierter Butylkautschuk oder chloriertes Polyethylen.

13. Verformbarer Boden nach Anspruch 1, dadurch gekennzeichnet, daß die Durchgangszone (9) des verformbaren Bodens zwischen der oberen Ummantelung (21) aus elastomerer Zusammensetzung und der dicken ziehharmonikaförmigen Wandung in den über den starren Querschienen (10) Liegenden Bereichen Füllecken (20) von ebenfalls elastomerer Zusammensetzung aufweist, die zur Gewährleistung der Planität der oberen Ummantelung (21) und zur Verbesserung der Haftung zwischen den starren Querschienen (10) und den Verstärkungseinlagen wie (18) und/oder (19) der dicken Wandung bestimmt sind.

## Claims

1. Distortable floor allowing continuity of passage between two successive rail or road vehicles in spite of differences in level, lateral swaying and warping between the floors of the said vehicles, constituted by a traffic zone (9), made of a thick wall in the form of a bellows, obtained by moulding under pressure an elastomeric composition, and rigid bars, spaced at regular intervals and arranged parallel with one another and across the direction of traffic, characterized in that said thick wall comprises linings of elastomeric compositions (19) and (21) including at least one layer of reinforcement (17) or (18), that said thick wall is intimately connected, by adhesion, to said rigid croos-bars (10), the assembly of which, at each of their ends, on a support shaft (13)—which is longitudinal, load-bearing, and located between the vehicles — allows longitudinal spring movement either side of a central position, of said rigid crossbars (10) on the support shaft (13), which is itself elastically supported by a frame (11) fixing it to the floor platform belonging to each of the vehicles thus connected.

2. Disortable floor according to claim 1, characterized in that the longitudinal spring movement of the rigid crossbars (10) on the support shaft (13) is provided by a sliding assembly of the said rigid crossbars (10) on the support shaft (13) via sliding bearings (12) and by that of the support shaft (13) on the frame (11) fixing it to the floor platforms via sliding end bearings (14), the said sliding bearings (12) and (14) having a layer of antifriction material on their internal surface in contact with the support shaft (13).

3. Distortable floor according to claim 1, characterized in that the longitudinal spring movement of the rigid crossbars (10) on the support shaft (13) is provided by elastic deformation of rubber based bearings (25) for mounting the said rigid crossbars (10) on the support shaft (13) and by deformation of the elastic end supports (24) for connecting the support shaft (13) to the rigid frame (11) fixing it to the floor platforms.

4. Distortable floor according to claim 1, characterized in that the longitudinal spring movement of the rigid crossbars (10) on the support shaft (13) is provided by the sliding assembly of the said rigid crossbars (10) on the support shaft (13) via sliding bearings (12) and by deformation of the elastic end supports (24) for connecting the support shaft (13) to the rigid frame (11) fixing it to the floor platforms.

5. Distortable floor according to claim 1, characterized in that the longitudinal spring movement of the rigid crossbars (10) on the support shaft (13) is provided by elastic deformation of rubber based bearings (25) for connecting the said rigid crossbars (10) with the support shaft (13) and by sliding of the support shaft (13) on the rigid frame (11) fixing it to the floor platforms, via sliding end bearings (14).

6. Distortable floor according to one of claims 1 to 5, characterized in that the support shaft (13), which may be made of metal or of homogeneous or composite polymer materials, is made in one piece.

7. Distortable floor according to one of claims 1 to 5, characterized in that the support shaft (13), made of metal or of homogeneous or composite polymer materials, is constituted by at least two telescoping elements such as (13a) and (13b).

8. Distortable floor according to claim 1, characterized in that the thick wall, of reinforced elastomeric composition, of the traffic zone (9) of the said distortable floor possesses, as reinforcing elements, a pair of crossed plies (17) and (18), symmetrically oriented, and made up of textile or metal cords.

9. Distortable floor according to claim 1, characterized in that the thick wall of reinforced elastomeric composition, of the traffic zone (9) of the said distortable floor possesses, as reinforcing elements, a pair of crossed plies (17) and (18), symmetrically oriented, and made up of aramide cords.

10. Distortable floor according to claim 1, characterized in that the thick wall of the traffic zone (9) of the said distortable floor is made up of at least two layers (17) and (18) of elastomeric composition possessing — in situ — a reinforcing material made up of short oriented fibres, rendering them anisotropic.

11. Distortable floor according to claim 1, characterized in that at least one of the coverings of elastomeric composition(s) (19) or (21) of the thick wall of the traffic zone (9) of the said distortable floor has a formulation intended to give it good fire resistance.

12. Distortable floor according to claim 11, characterized in that the elastomeric composition constituting at least one of the coverings (19) or (21) of the thick wall of the traffic zone (9) of the said distortable floor has as base material on elastomer possessing, in its molecular chain, chlorine or bromine atoms, such as polychloroprene, chlorinated or brominated butyl rubber, or chlorinated polyethylene.

13. Distortable floor according to claim 1, characterized in that the traffic zone (9) of the said distortable floor possesses, between the top covering (21) of elastomeric composition and the thick wall of the bellows, in the regions located above the rigid crossbars (10), corner fillers (20), likewise of elastomeric composition, intended to preserve the flatness of the top covering (21) and to improve adhesion between the said rigid crossbars (10) and the reinforcing plies such as (18) and/or (19) of the thick wall.

FIG.1

EP 0 297 936 B1

FIG. 2a

FIG. 2b

FIG.3

FIG.4

FIG.5a

FIG.5b

FIG.6a

FIG.6b

FIG.6c